# EUROPÄISCHE PATENTSCHRIFT

(11) **EP 3 140 087 B1**
(45) Veröffentlichungstag und Bekanntmachung des Hinweises auf die Patenterteilung: **27.06.2018**
(21) Anmeldenummer: 14735560.6
(22) Anmeldetag: 02.07.2014
(51) Int. Cl.: G08B 21/02, G08B 31/00, B25J 19/06, B25J 9/16

(54) **WARNVERFAHREN UND ROBOTERSYSTEM**
WARNING METHOD AND ROBOT SYSTEM
PROCÉDÉ D'ALERTE ET SYSTÈME ROBOTISÉ

(43) Veröffentlichungstag der Anmeldung: 15.03.2017
(73) Patentinhaber: Siemens Aktiengesellschaft, 80333 München (DE)
(72) Erfinder: BURMEISTER, Sören, 90762 Fürth (DE); HOLZ, Marc, 91058 Erlangen (DE)
(86) Internationale Anmeldenummer: PCT/EP2014/064079
(87) Internationale Veröffentlichungsnummer: WO 2016/000770

(56) Entgegenhaltungen:
- WO-A2-2011/128117
- US-A1- 2012 182 155

## Beschreibung

Die Erfindung betrifft ein Robotersystem und ein Verfahren zum Warnen einer Person, die sich während des Betriebs im Bereich des Robotersystems aufhält. Des Weiteren betrifft die Erfindung ein Computerprogramm, das dazu geeignet ist, ein Robotersystem im Sinne des erfindungsgemäßen Warnverfahrens zu betreiben.

Aus der Druckschrift WO 2011/128117 A2 ist eine Einrichtung zur Überwachung mindestens eines dreidimensionalen Sicherheitsbereich bekannt, die eine Aufnahmevorrichtung umfasst, die auf einen Überwachungsbereich gerichtet ist, und dazu dient, Abbilder eines Sicherheitsbereichs aufzunehmen. In einer Auswertevorrichtung werden die die Abbilder darauf geprüft, ob Personen oder Objekte in einen Sicherheitsbereich eingedrungen sind. Hierzu werden Linien oder Muster als moduliertes Licht mit vorgegebener Frequenz projiziert. Die Auswertevorrichtung erfasst die Form, Größe und/oder Position der projizierten Linien bzw. Muster.

Aus JP 2006/285635 A ist ein selbstfahrender Roboter bekannt, der in der Lage ist, sich entlang eines Pfades zu bewegen und dabei einen Abschnitt des eingeschlagenen Pfades Personen in der Umgebung anzuzeigen. Dazu sind an der Bodenoberfläche Leuchtmittel angebracht, die mit Empfängern gekoppelt sind. Der selbstfahrende Roboter verfügt über eine Beleuchtungssteuerung, die die im Boden befindlichen Leuchtmittel einschalten und damit einen Abschnitt des vom Roboter eingeschlagenen Pfades beleuchtet. Dabei bilden die am Boden angeordneten Leuchtmittel im Wesentlichen eine Kette aus.

WO 2009/0633181 A1 offenbart einen mobilen Roboter, der dazu ausgebildet ist, Gefahrenbereiche, die den Roboter umgeben, durch Leuchtvorrichtungen anzuzeigen. Hierzu ist der Roboter mit Projektoren versehen, die am Robotergehäuse befestigt sind. Der Roboter ist dazu ausgebildet, die Umrisse eines Gefährdungsbereichs zu ermitteln und mittels der Projektoren eine entsprechend geformte Projektion auf dem Boden zu erzeugen. Dabei kann eine Bewegung des Roboters selbst und eine Bewegung eines Roboterteils, wie beispielsweise eine Roboterarms, mit berücksichtigt werden.

WO 2014/036549 A2 offenbart einen Roboter, der über ein Sensorsystem zum Erfassen von Personen in einem Erfassungsbereich um den Roboter verfügt. Darüber hinaus umfasst der Roboter eine Recheneinheit, die dazu ausgebildet ist eine Gefahrenzone zu definieren, die sich zumindest teilweise mit dem Erfassungsbereich deckt. Des Weiteren verfügt der Roboter über eine Bilderkennungsvorrichtung, mittels derer menschliche Körperteile, wie beispielsweise Torso, Kopf oder Arme, erkannt werden können. In Abhängigkeit vom durch den Roboter erfassten Körperteil eines Menschen in der Gefahrenzone werden unterschiedliche Sicherheitsmaßnahmen, wie beispielsweise ein Reduzieren der Verfahrgeschwindigkeit des Roboters, eingeleitet.

Aus JP 05-229784 ist ein Warnsystem bekannt, das eine farbige Laserquelle umfasst, die dazu ausgebildet ist, auf einer Fläche einen Laserstrahlfilm auszubilden. Das Warnsystem nach JP 05-229784 ist dabei an einem Kran befestigt, der ein Transportgut am Kranhaken bewegt. Das Laserwarnsystem ist derart am Kran befestigt, dass der Gefahrenbereich unterhalb des Transportgutes sichtbar markiert wird.

Ein wesentlicher Nachteil der aus dem Stand der Technik bekannten Warnsystemen besteht darin, dass im Betrieb häufig Annäherungen zwischen Robotern und Personen auftreten, bei denen Unfälle nur durch das Eingreifen von Sicherheitsmechanismen des Roboters vermieden werden können. Dabei tritt der Roboter in Stillstand, so dass es zu einer Verzögerung beim vorliegenden Arbeitsprozess kommt.

Der Erfindung liegt die Aufgabe zugrunde, ein Robotersystem und ein zugehöriges Warnverfahren zur Verfügung zu stellen, das die skizzierten Nachteile aus dem Stand der Technik überwindet.

Das erfindungsgemäße Verfahren dient dazu, eine Person vor mindestens einem ersten Roboter zu warnen, der sich in einem Arbeitsraum befindet. Der Arbeitsraum ist in eine Mehrzahl von Arbeitsraumsegmenten eingeteilt, wobei einem Arbeitsraumsegment ein Bodensegment zugeordnet ist. Im erfindungsgemäßen Verfahren wird ein erster Schritt durchgeführt, in dem eine Roboterbewegung des mindestens einen Roboters prognostiziert wird. Das Prognostizieren kann dabei mittels einer zeitversetzten Simulation oder einer Codeanalyse eines Steuerprogramms des mindestens einen Roboters erfolgen. Im ersten Schritt wird dabei die Roboterbewegung für ein Arbeitsintervall prognostiziert. Das Arbeitsintervall ist ein wählbarer Zeitraum, der sich um eine wählbare Dauer in die Zukunft erstreckt. In einem zweiten Verfahrensschritt wird ermittelt, welchen Raum der mindestens eine Roboter während des Arbeitsintervalls im Zuge der Roboterbewegung durchfährt. Dabei umfasst der im zweiten Schritt ermittelte durchfahrene Raum einen Bereich, der vom Grundkörper des Roboters, und/oder einem Roboterarm, und/oder einem am Roboter angebrachten Manipulator durchfahren wird.

In einem dritten Verfahrensschritt wird mindestens ein Arbeitsraumsegment ermittelt, das zumindest teilweise im vom Roboter durchfahrenen Raum liegt. Dabei wird ebenfalls ermittelt, ob dieses Durchfahren jeweils in einem ersten oder zweiten Zeitraum erfolgt. Das Arbeitsintervall, in dem die prognostizierte Roboterbewegung erfolgt, umfasst den ersten und zweiten Zeitraum. Der erste Zeitraum ist vorzugsweise ein Zeitintervall von 0 bis 10 Sekunden in der Zukunft, der zweite Zeitraum vorzugsweise ein Zeitraum von 10 bis 20 Sekunden in der Zukunft. Der dritte Verfahrensschritt erlaubt es vorherzusagen, wann im Zuge eines bestimmungsgemäßen Programmablaufes in Arbeitsintervall des mindestens einen ersten Roboters in welchen Arbeitsraumsegmenten für eine Bedienperson eine Gefahrensituation vorliegt. Wird auf Basis der vorgenannten Verfahrensschritte ermittelt, dass ein Arbeitsraumsegment innerhalb des ersten Zeitraums vom Roboter durchfahren wird, wird an dem Bodensegment, das dem jeweiligen Arbeitsraumsegment zugeordnet ist, eine erste visuelle Warnung ausgegeben. Wird auf Basis der vorgenannten Verfahrensschritte ermittelt, dass ein Arbeitsraumsegment innerhalb des zweiten Zeitraumes vom Roboter durchfahren wird, wird an dem zugehörigen Bodensegment eine zweite visuelle Warnung ausgegeben.

Das erfindungsgemäße Verfahren kann sich bei der Prognose der Roboterbewegung auf eine zeitversetzte Simulation oder eine Codeanalyse der Programmierung des Roboters stützen. Eine zeitversetzte Simulation oder eine Codeanalyse einer Roboterprogrammierung können in technisch einfacher Weise bei geringem Bedarf an Rechenkapazität schnell und zuverlässig durchgeführt werden. Dabei können unvorhersehbare äußere Ereignisse, wie beispielsweise ein zwischenzeitiges Anhalten oder Verzögern des Roboters schnell in eine aktualisierte Ausgabe von visuellen Warnungen umgesetzt werden. Eine Programmierung eines Roboters umfasst im Wesentlichen eine sequentielle Abarbeitung von Bewegungsbefehlen, wodurch die Prognostizierbarkeit einer Roboterbewegung weiter erleichtert wird.

Das erfindungsgemäße Verfahren erlaubt es, ein differenziertes Bild von einer potentiellen künftigen Gefahrensituation in sinnfälliger Weise zu vermitteln. Das erleichtert die Antizipation der durchzuführenden Roboterbewegung durch Personen, die ihr Verhalten somit anpassen können. Dadurch kann in einfacher Weise eine Annäherung einer Person an den mindestens einen ersten Roboter verhindert werden, so dass Verzögerungen im Betriebsablauf des mindestens einen ersten Roboters minimiert werden.

In einer bevorzugten Ausführungsform des erfindungsgemäßen Verfahrens wird neben dem mindestens einen ersten Roboter auch ein erstes Transportgut berücksichtigt, das durch den mindestens einen ersten Roboter bewegt wird. Dadurch wird der durchfahrene Raum erfasst, der gemeinsam vom mindestens einen ersten Roboter und dem ersten Transportgut durchstrichen wird. Hierdurch kann mittels des erfindungsgemäßen Verfahrens der durchfahrene Raum exakter ermittelt werden, in dem eine Gefahrensituation für eine Person vorliegt. Das beanspruchte Verfahren wird dadurch differenzierter in der Erfassung einer vorliegenden Situation und erlaubt ein aussagekräftigeres Warnverhalten gegenüber einer Person, wodurch die im Arbeitsraum vorherrschende Sicherheit verbessert wird.

In einer weiteren bevorzugten Ausführungsform des erfindungsgemäßen Verfahrens sind die erste und zweite visuelle Warnung jeweils als Farbsignal oder als Leuchtmuster ausgebildet. Dabei können die erste und zweite visuelle Warnung beispielsweise als konstante oder periodische Leuchtsignale in unterschiedlichen Farben ausgebildet sein. Ebenso ist es möglich, dass die erste und zweite visuelle Warnung jeweils geometrische Formen bilden, die am jeweiligen Bodensegment ausgebildet werden, wie beispielsweise Punktmuster, geometrische Figuren oder Symbole. Dabei können die Leuchtmuster zeitlich konstant oder veränderlich sein. Unter einem zeitlich veränderlichen Leuchtmuster ist beispielsweise eine Animation zu verstehen. Das erfindungsgemäße Verfahren kann dadurch eine weiter differenzierte Warnung an eine Person ausgeben, die aufgrund ihrer Sinnfälligkeit in einfacher Weise ein präzises Bild über eine potentielle Gefahrensituation liefert.

Darüber hinaus kann das erfindungsgemäße Verfahren zusätzlich ermitteln, ob in mindestens einem dritten Zeitraum ein Arbeitsraumsegment vorliegt, das zumindest teilweise im durchfahrenen Raum liegt. Wenn erfasst wird, dass innerhalb des mindestens einen dritten Zeitraums ein Arbeitsraum durchfahren wird, wird an einem zugehörigen Bodensegment eine dritte visuelle Warnung ausgegeben. Ein Warnverfahren mit einer Berücksichtigung eines dritten Zeitraums unter Ausgabe einer dritten visuellen Warnung erlaubt es, in einer vorherrschenden Situation den Umfang des Gefährdungspotentials differenzierter zu erfassen und darzustellen. Hierdurch wird die vorherrschende Sicherheit weiter erhöht.

In einer bevorzugten Ausführungsform des erfindungsgemäßen Verfahrens kann in einem Verfahrensschritt, in dem eine erste, zweite oder dritte visuelle Warnung ausgegeben wird, zusätzlich eine akustische Warnung ausgelöst werden. Das Auslösen einer akustischen Warnung ermöglicht es, vor Situationen mit einem hohen Gefährdungspotential zu warnen. So kann beispielsweise, wenn im Arbeitsraum ausschließlich Arbeitsraumsegmente vorliegen, die im ersten Zeitraum vom mindestens einen ersten Roboter durchfahren werden, hiervor mittels eines Warntons hingewiesen werden. Dadurch können Betriebssituationen vermieden werden, in denen Sicherheitsmechanismen des mindestens einen ersten Roboters eingreifen und eine Verzögerung hervorrufen müssen. Dies ist besonders vorteilhaft bei Arbeitsabläufen, bei denen Roboter mit einer hohen Verfahrgeschwindigkeit eingesetzt werden.

In einer weiteren besonders bevorzugten Ausführungsform des erfindungsgemäßen Verfahrens werden die visuellen Warnungen und/oder die akustische Warnung weiter in Abhängigkeit von mindestens einem Prozessparameter des mindestens einen Roboters ausgebildet. Dabei wird eine visuelle oder akustische Warnung dahingehend angepasst, dass die Warnung je nach Intensität der vorherrschenden Gefahrensituation ausgebildet wird. Beispielsweise kann bei Vorliegen eines hohen Gefährdungspotentials ein veränderter Farbton gewählt werden, eine visuelle Warnung von einem konstanten zu einem periodischen Leuchtsignal übergehen, oder eine flächige visuelle Warnung in ein Leuchtmuster übergehen. Dabei kann als Prozessparameter, in dessen Abhängigkeit die visuellen Warnungen und/oder die akustische Warnung angepasst werden, eine Verfahrgeschwindigkeit des mindestens einen ersten Roboters sein. Bei einer hohen Verfahrgeschwindigkeit des Roboters während des Arbeitsintervalls liegt ein erhöhtes Gefährdungspotential vor als bei einer niedrigen Verfahrgeschwindigkeit. Darüber hinaus kann als Prozessparameter auch eine Beschaffenheitsinformation des ersten Transportguts eingesetzt werden. Die Beschaffenheitsinformation des ersten Transportguts gibt dabei wieder, ob aufgrund der physikalischen oder chemischen Eigenschaften des ersten Transportguts von diesem für eine Person eine erhöhte Gefahr ausgehen kann. Transportgüter, deren Beschaffenheitsinformation im Sinne des erfindungsgemäßen Verfahrens zu einer intensiveren bzw. deutlicheren Warnung führen, können beispielsweise Behälter mit Chemikalien oder Schmelze sein, spitze Gegenstände, Güter aus harten Materialien, oder Güter aus visuell schwer wahrnehmbaren Materialien, wie beispielsweise Glas oder PMMA. Ferner kann als Prozessparameter eine Information über Art und/oder Umfang der Sicherheitsmaßnahmen des mindestens einen Roboters eingesetzt werden, die ausgelöst werden, wenn die Sicherheitsmechanismen des mindestens einen Roboters eingreifen. Führt beispielsweise ein Eingreifen der Sicherheitsmechanismen zu einem Stillstand einer kompletten Fertigungsstraße, wird die erste und/oder zweite visuelle Warnung oder eine akustische Warnung mit erhöhter Intensität ausgegeben. Führt ein Eingreifen der Sicherheitsmechanismen zu einer Verzögerung ohne weitere Konsequenzen, wird die erste und/oder zweite visuelle Warnung oder die akustische Warnung mit verringerter Intensität ausgegeben.

In einer besonders bevorzugten Ausführungsform des erfindungsgemäßen Verfahrens wird in einem weiteren Schritt erfasst, wenn ein Arbeitsraumsegment während des Arbeitsintervalls von mindestens einem ersten Roboter nicht durchfahren wird. In diesem Fall wird im zugehörigen Bodensegment ein visuelles Entwarnsignal ausgegeben, das einer Person signalisiert, dass während des Arbeitsintervalls im entsprechenden Arbeitsraumsegment keine Gefahrensituationen vorliegt. Dadurch wird der Person im Arbeitsraum in sinnfälliger Weise vermittelt, welche Bereiche des Arbeitsraums ohne Weiteres zugänglich sind, ohne dass mit einem Stillstand oder einer Verzögerung des mindestens einen ersten Roboters zu rechnen ist. Hierdurch wird die Effizienz des erfindungsgemäßen Verfahrens weiter verbessert.

Ferner kann das erfindungsgemäße Verfahren dahingehend weitergebildet werden, dass die Verfahrensschritte, in denen eine Roboterbewegung in einem Arbeitsintervall prognostiziert wird, der während des Arbeitsintervalls durchfahrene Raum ermittelt wird, und ermittelt wird, ob ein Arbeitsraumsegment in einem ersten und einem zweiten Zeitraum zumindest teilweise im durchfahrenen Raum liegt, auch für mindestens einen zweiten Roboter durchgeführt werden. Dabei wird separat eine Roboterbewegung des zweiten Roboters in einem Arbeitsintervall prognostiziert und der dabei vom zweiten Roboter durchfahrene Raum ermittelt. Ebenso wird separat ermittelt, ob ein Arbeitsraumsegment innerhalb des ersten und zweiten Zeitraums zumindest im durchfahrenen Raum liegt. Die Schritte des Prognostizierens der Roboterbewegung, des Ermittelns des durchfahrenen Raums, und des Ermittelns von Arbeitsraumsegmenten, die zumindest teilweise im durchfahrenen Raum liegen, erfolgen dabei gleichzeitig mit den korrespondierenden Verfahrensschritten bezüglich des mindestens einen ersten Roboters. Das beim ersten und zweiten Roboter jeweils betrachtete Arbeitsintervall ist identisch, sowie der erste und zweite Zeitraum, für die jeweils erfasst wird, ob mindestens ein Arbeitsraumsegment zumindest teilweise im durchfahrenen Raum liegt. Hierdurch wird für einen Arbeitsraum mit einer Mehrzahl von Robotern ein vorliegendes Gefährdungspotential in zusammenhängender Weise erfasst und im Rahmen eines kohärenten Warnbildes, das eine Mehrzahl an ersten und zweiten visuellen Warnungen umfasst, dargestellt. Dadurch kann eine Person, die sich in einem Umfeld mit einer Vielzahl an Robotern befindet, eine komplexe vorliegende Situation schnell und einfach erfassen und so Gefahrensituation vermeiden, in denen Sicherheitsmechanismen von mindestens einem Roboter eingreifen und dadurch Verzögerungen im Arbeitsablauf vermeiden. Das erfindungsgemäße Verfahren verbessert die Sicherheit in einem Arbeitsraum und steigert gleichzeitig die mit den darin befindlichen Robotern erzielbare Produktivität.

Die Erfindung betrifft des Weiteren ein Robotersystem, das eine Steuereinheit umfasst und mindestens einen ersten Roboter, der in einem Arbeitsraum angeordnet ist und mit der Steuereinheit verbunden ist. Eine Verbindung zwischen dem mindestens einen ersten Roboter und der Steuereinheit kann dabei jegliche Form von Datenverbindung sein, über die Signale zwischen dem mindestens einen ersten Roboter und der Steuereinheit ausgetauscht werden können. Der Arbeitsraum, in dem der mindestens eine erste Roboter angeordnet ist umfasst dabei eine Mehrzahl an Arbeitsraumsegmenten, die den Arbeitsraum in entsprechend viele Bereiche einteilen. Jedes Arbeitsraumsegment umfasst dabei ein Bodensegment, dessen Umrisse mit der Form des Arbeitsraumsegments korrespondieren. Das erfindungsgemäße Robotersystem umfasst ferner mindestens ein Leuchtelement, das mit der Steuereinheit verbunden ist. Als Verbindung zwischen dem mindestens einem Leuchtelement und der Steuereinheit ist jede Form von Verbindung möglich, die es erlaubt, einen Steuerbefehl von der Steuereinheit an das mindestens eine Leuchtelement zu übermitteln. Im Einzelnen kann die Verbindung als Datenkabel oder als Funkverbindung ausgebildet sein. Das mindestens eine Leuchtelement ist dazu ausgebildet, an mindestens einem Bodensegment jeweils eine visuelle Warnung auszugeben. Die Steuereinheit des erfindungsgemäßen Robotersystems ist darüber hinaus in der Lage, ein Verfahren zum Warnen einer Person vor dem mindestens einen ersten Roboter durchzuführen, das die Merkmale des erfindungsgemäßen Warnverfahrens umfasst. Das erfindungsgemäße Robotersystem erlaubt es, einen komplexen Arbeitsablauf mit erhöhter Geschwindigkeit in einem Arbeitsraum durchzuführen, wobei ein hohes Maß an Sicherheit für Personen gegeben ist, die sich im Arbeitsraum aufhalten und bewegen. Gleichzeitig ist ein hohes Maß an Produktivität gegeben, indem Stillstandzeiten und Verzögerungen des mindestens einen ersten Roboters minimiert werden.

In einer bevorzugten Ausführungsform des erfindungsgemäßen Robotersystems umfasst dieses mindestens einen zweiten Roboter. Eine solche Ausführungsform erlaubt es, auf engem Raum eine Vielzahl von Robotern anzubringen, die mit hoher Geschwindigkeit betrieben werden können und in der Lage sind, auch komplexe Produktionsabläufe umzusetzen. Die dabei durch das Zusammenwirken der mindestens zwei Roboter auftretende komplexe Gefährdungssituation ist für eine Person in einfacher Weise zu erkennen, so dass eine enge und sichere Vernetzung von Mensch und Roboter möglich ist. Die Erfindung erlaubt es, die mit einem Robotersystem erzielbare Produktivität weiter zu steigern. In einer bevorzugten Ausführungsform der Erfindung kann das mindestens eine Leuchtelement als eine Mehrzahl an Segmentleuchten ausgebildet sein, die in unterschiedlicher Form und Anordnung montiert sein können. Eine Segmentleuchte ist einem bestimmten Bodensegment zugeordnet und dazu ausgebildet, jeweils am zugehörigen Bodensegment eine visuelle Warnung auszugeben. Eine Segmentleuchte kann dabei entweder unmittelbar am zugehörigen Bodensegment befestigt sein oder oberhalb des zugehörigen Bodensegments. Eine besonders bevorzugte Ausführungsform umfasst ein Leuchtelement, das an der Decke angebracht ist. In einer alternativen Ausführungsform des erfindungsgemäßen Robotersystems kann das mindestens eine Leuchtelement als steuerbarer Bildprojektor ausgebildet sein, der oberhalb der zugehörigen Bodensegmente angebracht ist. Ein steuerbarer Bildprojektor erlaubt es, mit einer geringen Zahl an Systemkomponenten eine Vielzahl von Bodensegmenten mit einer visuellen Warnung zu beaufschlagen. Hierdurch wird die Systemkomplexität reduziert und die Zuverlässigkeit des Robotersystems weiter gesteigert. Darüber hinaus kann bei einem steuerbaren Bildprojektor dessen Programmierung in einfacher Weise verändert werden, so dass visuelle Warnungen leicht an unterschiedliche Einsatzzwecke angepasst werden können. Ferner kann mit einem steuerbaren Bildprojektor ein konstantes oder zeitlich veränderliches Leuchtmuster auf ein Bodensegment projiziert werden. Das erfindungsgemäße Robotersystem kann dadurch schnell und effizient an eine Vielzahl von Konfigurationen im Arbeitsraum angepasst werden und eine Vielzahl von sinnfälligen visuellen Warnungen erzeugt werden.

Die Erfindung betrifft des Weiteren ein Computerprogramm, das auf einem Datenträger gespeichert ist und dazu geeignet ist, ein erfindungsgemäßes Warnverfahren in einem erfindungsgemäßen Robotersystem umzusetzen. Dabei ist das Computerprogramm vorzugsweise in einem Speicher der Steuereinheit des Robotersystems abgelegt, die die Daten des mindestens einen Roboters erfasst und die Ansteuerung des mindestens einen Leuchtelements vornimmt.

Weitere Ausführungsformen und Vorteile der Erfindung werden im Folgenden in den FIG 1 bis 5 wiedergegeben.

### Es zeigt:

- FIG 1: eine schematische Draufsicht einer ersten Ausführungsform des erfindungsgemäßen Robotersystems,
- FIG 2: ein Ablaufdiagramm des eine Ausführungsform erfindungsgemäßen Verfahrens,
- FIG 3: einen zeitlichen Ablauf einer weiteren Ausführungsform des erfindungsgemäßen Verfahrens,
- FIG 4: eine schematische Draufsicht einer zweiten Ausführungsform des erfindungsgemäßen Robotersystems,
- FIG 5: einen schematischen Aufbau einer dritten Ausführungsform des erfindungsgemäßen Robotersystems.

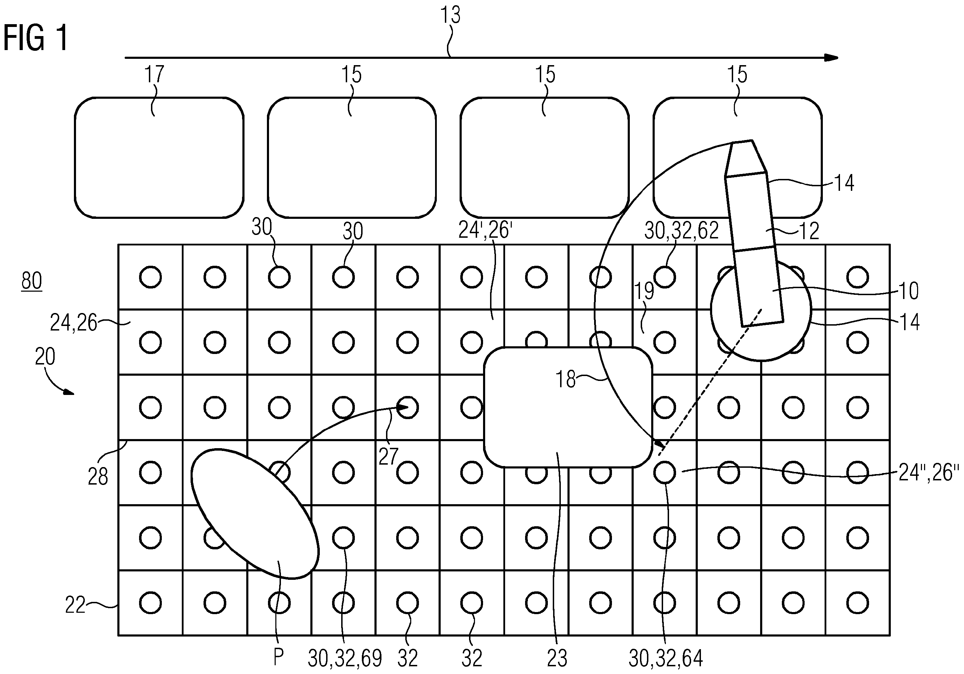

FIG 1 zeigt ein Robotersystem 80 mit einem ersten Roboter 10, der über einen beweglichen Manipulator verfügt und in einem Arbeitsraum 20 angeordnet ist. Im Bereich des Arbeitsraums 20 wird ein erstes Transportgut 15 und ein zweites Transportgut 17 entlang einer Förderrichtung 13 zum ersten Roboter 10 geführt. Der erste Roboter 10 ist dazu ausgebildet mit dem Manipulator 12 je ein Stück der Transportgüter 15, 17 zu greifen und in einer Schwenkbewegung zu einer Ablage 23 zu befördern. Dabei sind der erste Roboter 10 und die Ablage 23 im Arbeitsraum 20 angebracht. Der Arbeitsraum 20 ist in eine Vielzahl von im Wesentlichen rechteckigen Arbeitssegmenten 24 eingeteilt, die entlang von Trennlinien 28 aneinander angrenzen. Die Arbeitssegmente 24 sind im Wesentlichen nicht näher dargestellte quaderförmige Raumsegmente, die an einer unteren Seite jeweils durch den Boden 22 des Arbeitsraums begrenzt werden. Zu jedem Arbeitsraumsegment 24 gehört entsprechend ein Bodensegment 26, wobei die Bodensegmente 26 ebenfalls entlang der gedachten Trennlinien 28 aneinander angrenzen. Darüber hinaus sind die Bodensegmente 26 jeweils mit einem Leuchtelement 30 versehen, das als eine Segmentleuchte ausgebildet ist. Die Segmentleuchten 32 sind jeweils ausgebildet, auf den Oberflächen eines Bodensegments 26 mittels Beleuchtung eine visuelle Warnung auszugeben.

FIG 1 zeigt ferner eine Person P, die sich entlang eines Pfades 27 im Arbeitsraum 20 bewegt. In FIG 1 ist eine Roboterbewegung 18 mit einem Pfeil dargestellt, die vom ersten Roboter 10 in einem nicht näher dargestellten Arbeitsintervall 50 durchzuführen ist. Die Pfeilrichtung stellt dabei den zeitlichen Ablauf der Roboterbewegung 18 dar. Der erste Roboter 10 durchfährt dabei einen Raum 19, der ein im Wesentlichen eine kreisbogenförmige Gestalt aufweist. Insgesamt schneidet sich der durchfahrene Raum 19 mit einer Mehrzahl von Arbeitsraumsegmenten 24 und überstreicht deren zugehörige Bodensegmente 26. In FIG 1 ist ferner ein Arbeitsraumsegment 24' mit dessen zugehörigem Bodensegment 26' abgebildet, das im Zuge der Roboterbewegung 18 vor einem zweiten Arbeitssegment 24" und dessen zugehörigen Bodensegment 26" vom ersten Roboter durchfahren wird. Das erste Bodensegment 26' wird in einem in FIG 1 nicht dargestellten ersten Zeitraum 26 vom ersten Roboter 10 überstrichen, so dass eine erste visuelle Warnung 62 am ersten Bodensegment 26' ausgegeben wird. Das zweite Bodensegment 26" wird erst in einem späteren, nicht dargestellten, zweiten Zeitraum 54 vom ersten Roboter 10 überstrichen, so dass am zweiten Bodensegment 26" über ein Leuchtelement 30 eine zweite visuelle Warnung 64 ausgegeben wird. Ferner weist der Arbeitsraum 20 Arbeitsraumsegmente 24 auf, die im Arbeitsintervall 50 nicht vom ersten Roboter 10 durchfahren werden. In diesen Arbeitsraumsegmenten 24 liegt für die Person P keine Gefährdungssituation vor, so dass auf den zugehörigen Bodensegmenten 26 ein Entwarnsignal 69 ausgegeben wird. Die unterschiedlichen visuellen Warnungen 62, 64 sowie das Entwarnsignal 69 zeigen der Person P an, welches Gefährdungspotential in welchem Bereich des Arbeitsraumes 20 vorliegt.

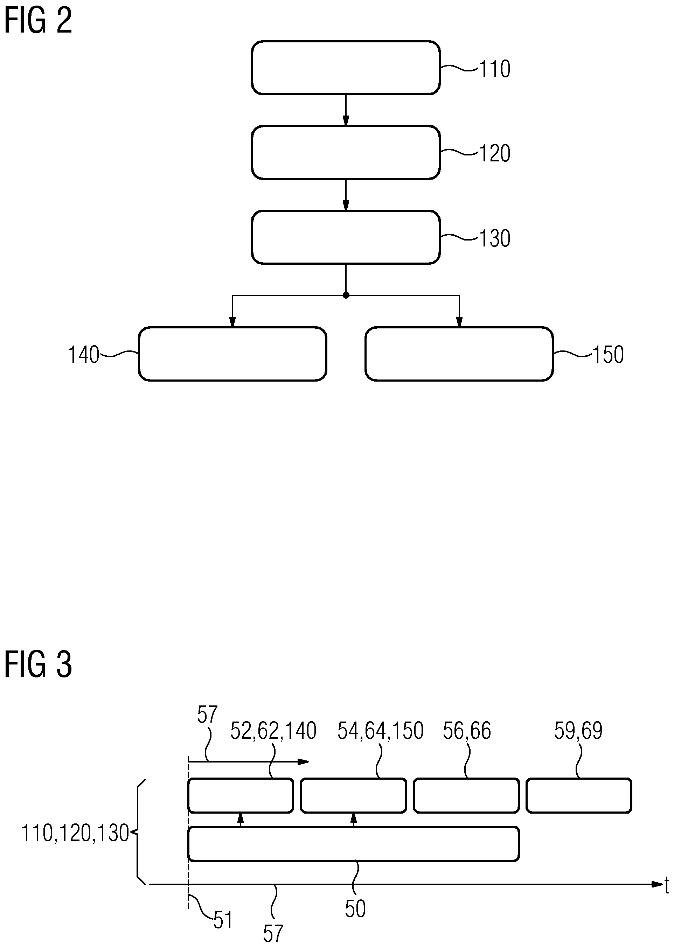

In FIG 2 ist ein Ablaufschema des erfindungsgemäßen Verfahrens dargestellt. In einem ersten Schritt 110 erfolgt ein Prognostizieren einer Roboterbewegung 18 die vom mindestens einen ersten Roboter 10 in einem Arbeitsintervall 50 durchzuführen ist. Dabei wird auf Basis der Programmierung des mindestens einen ersten Roboters 10 dessen geplanter Bewegungsablauf unter der Annahme prognostiziert, dass während dessen keine Ereignisse eintreten, die zu einem Stillstand oder einer Verzögerung des mindestens einen ersten Roboters 10 führen. In einem weiteren Verfahrensschritt 120 wird ermittelt, welcher Raum vom mindestens einen ersten Roboter 10 im analysierten Arbeitsintervall 50 durchfahren wird. In einem weiteren Verfahrensschritt 130 wird ermittelt, ob ein Arbeitsraumsegment 24 zumindest teilweise im durchfahrenen Raum 19 liegt. Ein Arbeitsraumsegment 24, das vom mindestens einen ersten Roboter 10 während des Arbeitsintervalls 50 durchfahren wird, wird dabei zunächst als potentieller Gefahrenbereich für eine Person P identifiziert. Des Weiteren wird im Verfahrensschritt 130 ermittelt, ob ein entsprechendes Arbeitsraumsegment 24 in einem ersten oder zweiten Zeitraum 52, 54 vom mindestens einen ersten Roboter 10 durchfahren wird. Ein Arbeitsraumsegment 24, das in einem früheren Zeitraum durchfahren wird als ein Arbeitsraumsegment in einem späteren Zeitraum, wird dabei als gefährlicher klassifiziert.

In Abhängigkeit vom Ergebnis des Verfahrensschritts 130 findet für ein Arbeitsraumsegment 24 entweder der vierte Verfahrensschritt 140 oder der fünfte Verfahrensschritt 150 statt. Wird im vorangegangenen Ermittlungsschritt 130 festgestellt, dass das Arbeitsraumsegment 24 während des ersten Zeitraums 52 zumindest teilweise im vom Roboter 10 durchfahren Raum 19 liegt, wird am zugehörigen Bodensegment 26 eine erste visuelle Warnung 52 ausgegeben. Wird im vorangegangenen Verfahrensschritt 130 ermittelt, dass das Arbeitsraumsegment 24 während des zweiten Zeitraums 54 zumindest teilweise im durchfahrenen Raum 19 liegt, wird am zugehörigen Bodensegment 26 eine zweite visuelle Warnung 64 ausgegeben.

Aus FIG 3 geht der zeitliche Ablauf einer weiteren Ausführungsform des erfindungsgemäßen Verfahrens hervor. Ausgangspunkt ist der Startzeitpunkt 51, der den Beginn des Arbeitsintervalls 50 definiert. Aus FIG 3 geht ein erster Zeitraum 52 hervor, der im Wesentlichen ebenfalls am Startzeitpunkt 51 beginnt. Wird während der nicht näher dargestellten Verfahrensschritte 110, 120, 130 festgestellt, dass ein ebenfalls nicht dargestelltes Arbeitsraumsegment 24 innerhalb des ersten Zeitraums 52 durchfahren wird, wird im Rahmen des vierten Verfahrensschrittes 140 eine erste visuelle Warnung 62 am zugehörigen Bodensegment 26 ausgegeben. An den ersten Zeitraum 52 schließt sich ein zweiter Zeitraum 54 an. Wird ein Arbeitsraumsegment 24 während des zweiten Zeitraums 54 durchfahren wird im Rahmen des fünften Verfahrensschritts 150 eine zweite visuelle Warnung 64 ausgegeben. Dabei liegt der zweite Zeitraum 54 im Bereich des Arbeitsintervalls 50. Auf dem zweiten Zeitraum 54 folgt ein dritter Zeitraum 56, der im wesentlichen mit dem Ende des Arbeitsintervalls 50 ebenfalls endet. Wird ein Arbeitsraumsegment 24 während des dritten Zeitraums 56 durchfahren, so wird eine dritte visuelle Warnung 66 am zugehörigen Bodensegment 26 ausgegeben. Ferner offenbart FIG 3 einen zusätzlichen Zeitraum 59, der nach dem Ende des Arbeitsintervalls 50 liegt. Wird ein Arbeitsraumsegment 24 bis zum Beginn des zusätzlichen Zeitraums 59 nicht durchfahren, wird im zugehörigen Bodensegment 26 ein Entwarnsignal 69 ausgegeben. Der Pfeil 57 bildet den Zeitablauf ab, so dass das Arbeitsintervall 50, sowie die Zeiträume 52, 54, 59 stets Zeiträume sind, die relativ zu einem Startzeitpunkt 51 einer Betrachtung zu verstehen sind. Die Zeiträume 52, 54, 56, 59 wandern somit im Betriebsablauf des zugehörigen Robotersystem 80 entlang des Pfeils 57 mit. Das in FIG 3 dargestellte Verfahren erfolgt unter durchgehender Wiederholung der einzelnen Verfahrensschritte 110, 120, 130, 140 und 150.

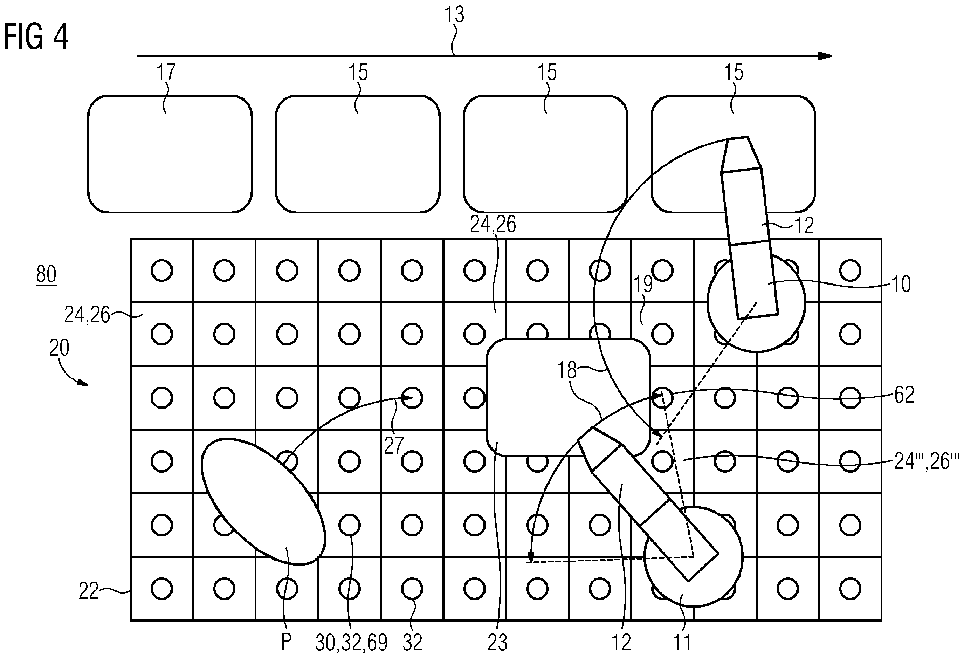

FIG 4 zeigt eine weitere Ausführungsform des erfindungsgemäßen Robotersystems 80 im Arbeitsraum 20. Im Bereich des Arbeitsraums 20 wird ein erstes Transportgut 15 und ein zweites Transportgut 17 entlang einer Förderrichtung 13 zum ersten Roboter 10 geführt. Der erste Roboter 10 ist dazu ausgebildet mit dem Manipulator 12 je ein Stück der Transportgüter 15, 17 zu greifen und in einer Schwenkbewegung zur Ablage 23 zu befördern. Dabei sind der erste Roboter 10 und die Ablage 23 im Arbeitsraum 20 angebracht. Der Arbeitsraum 20 ist in eine Vielzahl von im Wesentlichen rechteckigen Arbeitssegmenten 24 eingeteilt, die entlang von Trennlinien 28 aneinander angrenzen. Die Arbeitssegmente 24 sind dabei im Wesentlichen nicht näher dargestellte quaderförmige Raumsegmente, die an einer unteren Seite jeweils durch den Boden 22 des Arbeitsraums begrenzt werden. Zu jedem Arbeitsraumsegment 24 gehört entsprechend ein Bodensegment 26, wobei die Bodensegmente 26 ebenfalls entlang der gedachten Trennlinien 28 aneinander angrenzen. Darüber hinaus sind die Bodensegmente 26 jeweils mit einem Leuchtelement 30 versehen, das als eine Segmentleuchte ausgebildet ist. Die Segmentleuchten 32 sind jeweils ausgebildet, auf der Oberfläche eines Bodensegments 26 mittels Beleuchtung eine visuelle Warnung auszugeben.

FIG 4 zeigt ferner einen zweiten Roboter 11, der über einen Manipulator 12 verfügt und im Bereich der Ablage 23 einen Arbeitsschritt durchführt. Der erste und der zweite Roboter 10, 11 führen jeweils gleichzeitig Bewegungen 18 aus, bei denen jeweils ein Raum 19 durchfahren wird. Dabei liegen Arbeitsraumsegmente 24 zumindest teilweise im durchfahrenen Raum 19, der den Robotern 10, 11 zugeordnet ist. Die Richtung der Bewegungen 18 ist im FIG 4 jeweils mit einem Pfeil verdeutlicht. Die Pfeilrichtung entspricht dem zeitlichen Ablauf der jeweiligen Bewegung 18 im nicht dargestellten Arbeitsintervall 50. Das Arbeitsraumsegment 24'" im Bereich der Ablage 23 wird während des Arbeitsintervalls 50 von beiden Robotern durchfahren. Der erste Roboter 10 durchfährt das Arbeitsraumsegment 24'" am Ende seiner Bewegung 18 im zweiten Zeitraum 54, der ebenfalls nicht abgebildet ist. Ferner wird das Arbeitsraumsegment 24'" vom zweiten Roboter 11 am Anfang des Arbeitsintervalls 50, und damit im ersten Zeitraum 52. Das Robotersystem 80 erkennt auf Basis des erfindungsgemäßen Verfahrens, dass im Arbeitsraumsegment 24'" bereits im ersten Zeitraum 52 ein Gefährdungspotential vorliegt und gibt im zugehörigen Bodensegment 26'" die erste visuelle Warnung 62 aus. Die erste visuelle Warnung 62 wird dabei mittels des Leuchtelements 30 ausgegeben, das als Segmentleuchte 32 ausgebildet ist.

Für die weiteren Arbeitsraumsegmente 24, die ebenfalls zumindest teilweise im durchfahrenen Raum 19 liegen, wird ebenfalls auf Basis des erfindungsgemäßen Verfahrens ermittelt, ob im ersten oder zweiten Zeitraum 52, 54 ein Gefährdungspotential vorliegt und eine entsprechende erste oder zweite visuelle Warnung 62, 64 ausgegeben. Bei Arbeitsraumsegmenten 24, die von den Robotern 10, 11 nicht durchfahren werden, wird das Entwarnsignal 69 ausgegeben.

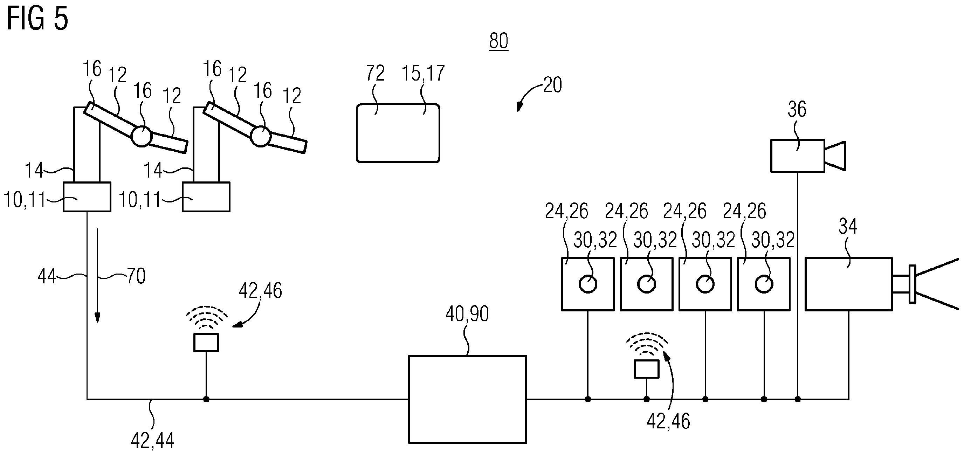

Aus FIG 5 geht schematisch der Aufbau des erfindungsgemäßen Robotersystem 80 hervor, das zwei Roboter 10, 11 umfasst. Jeder der Roboter 10, 11 verfügt über einen Manipulator 12, der über einen Aktuator 16 angetrieben wird. Die Roboter 10, 11 sind ferner mit einer Sensorik 14 ausgestattet, die es beispielsweise erlaubt, die Anwesenheit einer Person zu erkennen und die zugehörigen Informationen an die Steuerung der Roboter 10, 11 weiterzuleiten. Die Roboter 10, 11 sind im Arbeitsraum 20 zur Verrichtung von Arbeitsschritten am ersten und zweiten Transportgut 15, 17 angeordnet. Die Transportgüter 15, 17 weisen jeweils eine Beschaffenheitsinformation 72 auf, die über die Sensorik 14 der Roboter 10, 11 erfasst werden kann. Die Roboter 10, 11 sind in der Lage, die erfasste Beschaffenheitsinformation 72 über eine Verbindung 42 an eine Steuereinheit 40 weiterzuleiten. Neben der Beschaffenheitsinformation 72 werden auch andere Prozessparameter 70, wie beispielsweise die Bewegungsgeschwindigkeit eines Roboters 10, 11 über die Verbindung 42 an die Steuereinheit 40 weitergeleitet. Die Verbindung 42 ist zum Transport von Daten geeignet und ist zwischen dem ersten Roboter 10 und der Steuereinheit 40 als Datenkabel 44 ausgebildet. Der zweite Roboter 11 ist über eine Verbindung 42 mit der Steuereinheit 40 gekoppelt, die als Funkverbindung ausgebildet ist.

Des Weiteren zeigt FIG 5 schematisch eine Mehrzahl an Bodensegmenten 26, die jeweils einem nicht näher dargestellten Arbeitsraumsegment 24 zugeordnet sind. Die Bodensegmente 26 sind mit Segmentleuchten 32 versehen, die als Leuchtmittel 30 dienen. Eine einzelne Segmentleuchte 32 ist dazu geeignet, auf zumindest einem Bodensegment 26 eine visuelle Warnung 62, 64, 66 oder ein Entwarnsignal 69 hervorzurufen. Ein Bodensegment 26 ist über eine Funkverbindung 46 mit der Steuereinheit 40 gekoppelt. Die weiteren Bodensegmente 36 sind über Datenkabel 44, die als Verbindung 42 dienen, mit der Steuereinheit 40 verbunden. Die Steuereinheit 40 ist ferner über das Datenkabel 44 mit einem steuerbaren Bildprojektor 34, der als Beamer ausgebildet ist, gekoppelt, der in der Lage ist, auf den Bodensegmenten 26 auch eine visuelle Warnung 62, 64, 66 auszugeben. Ferner ist der steuerbare Bildprojektor 34 dazu geeignet, auf nicht näher dargestellten Bodensegmenten 26 ohne ein Leuchtmittel 30 eine visuelle Warnung 62, 64, 66 oder ein Entwarnsignal 69 hervorzurufen. Der steuerbare Bildprojektor 34 kann über die Steuereinheit 40 derart angesteuert werden, dass der als visuelle Warnung 62, 64, 66 oder als Entwarnsignal 69 ein konstantes oder zeitlich veränderliches Leuchtmuster ausgegeben wird. Die visuelle Warnung 62, 64, 66 ist dabei in der Lage, unterschiedliche Farben anzunehmen, können Farbübergänge umfassen, oder als stillstehende oder animierte Symbole ausgebildet sein. Das Robotersystem 80 ist auch mit einem akustischen Warnsignalgeber 36 versehen, der über das Datenkabel 44 mit der Steuereinheit 40 verbunden ist und ist dazu geeignet, in Situationen mit erhöhtem Gefährdungspotential zusätzlich eine akustische Warnung an eine Person in Arbeitsraum 20 auszugeben. Die Steuereinheit 40 verfügt über einen Speicher, auf dem ein Computerprogramm 90 ausführbar abgespeichert ist, das das erfindungsgemäße Verfahren im Robotersystem 80 umsetzt. Das Computerprogramm 90 ist derart ausgebildet, dass es alle über Roboter 10, 11 erfassten und über die Verbindungen 42 per Datenkabel 44 oder Funkverbindung 46 versendeten Informationen, wie zum Beispiel Prozessparameter 70, im Rahmen des erfindungsgemäßen Verfahrens zu verarbeiten und auszuwerten. Das Computerprogramm 90 ist auch dazu geeignet, Steuersignale an die einzelnen Leuchtmittel 30, den steuerbaren Bildprojektor 34 oder den akustischen Warnsignalgeber 36 zu senden, die die entsprechenden visuellen Warnungen 62, 64, 66, akustischen Warnungen 68 und das Entwarnsignal 69 hervorrufen.

## Patentansprüche

1. Verfahren zum Warnen einer Person vor mindestens einem ersten Roboter (10) in einem Arbeitsraum (20), der eine Mehrzahl an Bodensegmenten (26) umfasst, wobei den Bodensegmenten (26) jeweils ein Arbeitsraumsegment (24) zugeordnet ist, umfassend die Schritte:
a) Prognostizieren einer Roboterbewegung (18), die vom mindestens einen ersten Roboter (10) in einem Arbeitsintervall (50) durchgeführt wird, wobei das Arbeitsintervall (50) einen ersten Zeitraum (52) und einen späteren zweiten Zeitraum (54) umfasst;
b) Ermitteln eines während des Arbeitsintervalls (50) vom mindestens einen ersten Roboter (10) durchfahrenen Raums (19) ;
c) Ermitteln von mindestens einem Arbeitsraumsegment (24), das innerhalb des ersten oder zweiten Zeitraums (52,54) zumindest teilweise im durchfahrenen Raum (19) liegt;
d) Ausgeben einer ersten visuellen Warnung (62) an einem Bodensegment (26), wenn das zugehörige Arbeitsraumsegment (24) innerhalb des ersten Zeitraums (52) durchfahren wird; und
e) Ausgeben einer zweiten visuellen Warnung (64) an einem Bodensegment (26), wenn das zugehörige Arbeitsraumsegment (24) innerhalb des zweiten Zeitraums (52) durchfahren wird.

2. Verfahren nach Anspruch 1, **dadurch gekennzeichnet, dass** im Schritt b) der zusammen vom mindestens einen ersten Roboter (10) und einem ersten Transportgut (15) durchfahrene Raum (19) erfasst wird,

3. Verfahren nach Anspruch 1 oder 2, **dadurch gekennzeichnet, dass** die erste und zweite visuelle Warnung (62, 64) jeweils als Farbsignal oder Leuchtmuster ausgebildet ist.

4. Verfahren nach einem der Ansprüche 1 bis 3, **dadurch gekennzeichnet, dass** der Schritt c) auch für mindestens einen dritten Zeitraum (56) durchgeführt wird und in mindestens einem weiteren Schritt f) eine dritte visuelle Warnung (66) an einem Bodensegment (26) ausgegeben wird, wenn das zugehörige Arbeitsraumsegment (24) durchfahren wird.

5. Verfahren nach einem der Ansprüche 1 bis 4, **dadurch gekennzeichnet, dass** in einem der Verfahrensschritte d) bis f) zusätzlich eine akustische Warnung (68) ausgegeben wird (68).

6. Verfahren nach einem der Ansprüche 1 bis 5, **dadurch gekennzeichnet, dass** die visuellen Warnungen (62, 64, 66) und/oder die akustische Warnung (68) in Abhängigkeit von mindestens einem Prozessparameter (70) des mindestens einen ersten Roboters (10) ausgebildet sind.

7. Verfahren nach Anspruch 5, **dadurch gekennzeichnet, dass** der mindestens eine Prozessparameter (70) eine Bewegungsgeschwindigkeit des mindestens einen ersten Roboters (10) und/oder eine Beschaffenheitsinformation (72)des ersten oder eines zweiten Transportguts (15, 17) umfasst.

8. Verfahren nach einem der Ansprüche 1 bis 7, **dadurch gekennzeichnet, dass** in einem weiteren Schritt g) in jeweils einem Bodensegment (26) ein visuelles Entwarnsignal (69) ausgegeben wird, wenn das zugehörige Arbeitsraumsegment (24) während des Arbeitsintervalls (50) vom mindestens einen ersten Roboter (10) nicht durchfahren wird.

9. Verfahren nach einem der Ansprüche 1 bis 8, **dadurch gekennzeichnet, dass** die Verfahrensschritte a) bis c) zusätzlich für mindestens einen zweiten Roboter (11) durchgeführt werden.

10. Robotersystem (80), umfassend eine Steuereinheit (40), mindestens einen ersten Roboter (10), der mit der Steuereinheit (40) verbunden ist und der in einem Arbeitsraum (20) angeordnet ist, wobei der Arbeitsraum (20) eine Mehrzahl an Arbeitsraumsegmenten (24) umfasst, denen jeweils ein Bodensegment (26) zugeordnet ist; mindestens ein Leuchtelement (30), das mit der Steuereinheit (40) verbunden ist und dazu ausgebildet ist, an mindestens einem Bodensegment (26) jeweils eine visuelle Warnung (62, 64, 66) auszugeben, **dadurch gekennzeichnet, dass** die Steuereinheit (40) dazu ausgebildet ist, ein Verfahren nach einem der Ansprüche 1 bis 9 durchzuführen.

11. Robotersystem (80) nach Anspruch 10, **dadurch gekennzeichnet, dass** das Robotersystem (80) mindestens einen zweiten Roboter (11) umfasst.

12. Robotersystem (80) nach einem der Ansprüche 10 oder 11, **dadurch gekennzeichnet, dass** das mindestens eine Leuchtelement (30) als eine Mehrzahl an Segmentleuchten (32) ausgebildet ist, die jeweils am oder oberhalb des zugehörigen Bodensegments (26) angebracht ist.

13. Robotersystem (80) nach einem der Ansprüche 11 oder 12, **dadurch gekennzeichnet, dass** das mindestens eine Leuchtelement (30) als oberhalb der zugehörigen Bodensegmente (26) angeordneter steuerbarer Bildprojektor (34) ausgebildet ist.

14. Computerprogramm (90), gespeichert auf einem Speicher oder Datenträger, geeignet zur Durchführung eines Verfahrens nach einem der Ansprüche 1 bis 9 an einem Robotersystem (80) nach einem der Ansprüche 10 bis 13.

15. Steuereinheit (40), umfassend einen Speicher, **dadurch gekennzeichnet, dass** auf dem Speicher ein Computerprogramm (90) nach Anspruch 14 ausführbar abgespeichert ist.

## Claims

1. Method for warning a person about at least one first robot (10) in a working space (20) which comprises a plurality of floor segments (26), wherein a working space segment (24) is assigned to each of the floor segments (26), comprising the steps:
a) prediction of a robot movement (18) which is performed by the at least one first robot (10) in a working interval (50), wherein the working interval comprises a first time period (52) and a later second time period (54);
b) determination of a space (19) travelled through by the at least one first robot (10) during the working interval (50) ;
c) determination of at least one working space segment (24) which, within a first and a second time period (52, 54), lies at least partially within the space (19) travelled through;
d) output of a first visual warning (62) on a floor segment (26) if the associated working space segment (24) will be travelled through within the first time period (52); and
e) output of a second visual warning (64) on a floor segment (26) if the associated working space segment (24) will be travelled through within the second time period (54).

2. Method according to claim 1, **characterised in that** in the step b) the space (19) travelled through jointly by the at least one first robot (10) and a first transport item (15) is detected.

3. Method according to claim 1 or 2, **characterised in that** the first and second visual warnings (62, 64) are each in the form of a coloured signal or light pattern.

4. Method according to one of claims 1 to 3, **characterised in that** the step c) is also carried out for at least one third time period (56) and in at least one further step f) a third visual warning (66) is output on a floor segment (26) if the associated working space segment (24) is travelled through.

5. Method according to one of claims 1 to 4, **characterised in that** in one of the method steps d) to f) an audible warning (68) is additionally output (68).

6. Method according to one of claims 1 to 5, **characterised in that** the visual warnings (62, 64, 66) and/or the audible warning (68) are embodied as a function of at least one process parameter (70) of the at least one first robot (10).

7. Method according to claim 5, **characterised in that** the at least one process parameter (70) comprises a movement speed of the at least one first robot (10) and/or an item of qualitative data (72) for the first or a second transport item (15, 17).

8. Method according to one of claims 1 to 7, **characterised in that** in a further step g) a visual all-clear signal (69) is output in each case in a floor segment (26) if the associated working space segment (24) is not travelled through by the at least one first robot (10) during the working interval (50).

9. Method according to one of claims 1 to 8, **characterised in that** the method steps a) to c) are additionally carried out for at least one second robot (11).

10. Robot system (80) comprising a control unit (40), at least one first robot (10) which is linked to the control unit (40) and is arranged in a working space (20), wherein the working space (20) comprises a plurality of working space segments (24) to each of which is assigned a floor segment (26); at least one lighting element (30) which is linked to the control unit (40) and is embodied to output in each case on at least one floor segment (26) a visual warning (62, 64, 66), **characterised in that** the control unit (40) is embodied to carry out a method according to one of claims 1 to 9.

11. Robot system (80) according to claim 10, **characterised in that** the robot system (80) comprises at least one second robot (11) .

12. Robot system (80) according to one of claims 10 or 11, **characterised in that** the at least one lighting element (30) is embodied as a plurality of light segments (32), each of which is affixed on or above the associated floor segment (26).

13. Robot system (80) according to one of claims 11 or 12, **characterised in that** the at least one lighting element (30) is embodied as a controllable image projector (34) arranged above the associated floor segments (26).

14. Computer program (90) stored on a memory or data carrier, suitable for carrying out a method according to one of claims 1 to 9 on a robot system (80) according to one of claims 10 to 13.

15. Control unit (40), comprising a memory, **characterised in that** a computer program (90) is stored on the memory such that it can be executed according to claim 14.

## Revendications

1. Procédé pour prévenir une personne de la présence d'au moins un premier robot (10) dans un espace (20) de travail, qui comprend une multiplicité de segments (26) de plancher, respectivement un segment (24) d'espace de travail étant affecté aux segments (26) de plancher, comprenant les stades :
a) on pronostique un déplacement (18) du robot, qui s'effectue par au moins un premier robot (10) dans un intervalle (50) de travail, l'intervalle (50) de travail comprenant un premier laps de temps (52) et un deuxième laps de temps (54) ultérieur;
b) on détermine un espace (19) dans lequel, pendant l'intervalle (50) de travail, au moins un premier robot (10) est passé;
c) on détermine au moins un segment (24) d'espace de travail, qui, dans le premier ou le deuxième laps de temps (52, 54), se trouve au moins en partie dans l'espace (19) parcouru;
, si on est passé dans le segment (24) d'espace de travail associé dans le premier laps de temps (52);
d) on émet un premier avertissement (62) visuel vers un segment (26) de plancher, si on est passé dans le segment (24) d'espace de travail associé dans le premier laps de temps (52), si le segment (24) d'espace de travail associé a été parcouru dans le premier laps de temps (52) et
e) on émet un deuxième avertissement (64) visuel vers un segment (26) de plancher, si le segment (24) d'espace de travail associé a été parcouru dans le deuxième laps de temps (52).

2. Procédé suivant la revendication 1, **caractérisé en ce que**, dans le stade b), on détecte si ensemble au moins un premier robot (18) et une première marchandise (15) à transporter sont passés dans l'espace (19).

3. Procédé suivant la revendication 1 ou 2, **caractérisé en ce que** le premier et le deuxième avertissements (62, 64) visuels sont constitués chacun sous la forme d'un signal coloré ou d'un motif lumineux.

4. Procédé suivant l'une des revendications 1 à 3, **caractérisé en ce que** l'on effectue le stade c) également pendant un au moins un troisième laps de temps (56) et, dans au moins un autre stade f), on émet un troisième avertissement (66) visuel vers un segment (26) de plancher, si le segment (24) d'espace de travail associé a été parcouru.

5. Procédé suivant l'une des revendications 1 à 4, **caractérisé en ce que**, dans l'un des stades d) à f) du procédé, on émet (68), en outre, un avertissement (68) acoustique.

6. Procédé suivant l'une des revendications 1 à 5, **caractérisé en ce que** les avertissements (62, 64, 66) visuels et/ou l'avertissement (68) acoustique sont formés en fonction d'au moins un paramètre (70) opératoire du au moins un premier robot (10).

7. Procédé suivant la revendication 5, **caractérisé en ce que** le a moins un paramètre (70) opératoire comprend une vitesse de déplacement du au moins un premier robot (10) et/ou une information (72) de l'état de la première ou d'une deuxième marchandise (15, 17) à transporter.

8. Procédé suivant l'une des revendications 1 à 7, **caractérisé en ce que**, dans un autre stade g), on émet, dans respectivement un segment (26) de plancher, un signal (69) visuel de fin d'avertissement si le au moins un premier robot (10) n'est pas passé dans le segment (24) d'espace de travail associé pendant l'intervalle (50) de temps.

9. Procédé suivant l'une des revendications 1 à 8, **caractérisé en ce que** l'on effectue les stades a) à c) du procédé supplémentairement pour au moins un deuxième robot (11).

10. Système (80) de robot, comprenant une unité (40) de commande, au moins un premier robot (10), qui est relié à l'unité (40) de commande et qui est disposé dans un espace (20) de travail, l'espace (20) de travail comprenant une multiplicité de segments (24) d'espace de travail auxquels sont associés respectivement des segments (26) de plancher, au moins un élément (30) lumineux, qui est relié à l'unité (40) de commande et qui est constitué pour émettre, vers au moins un segment (26) de plancher, respectivement un avertissement (62, 64, 66) visuel, **caractérisé en ce que** l'unité (40) de commande est constituée pour effectuer un procédé suivant l'une des revendications 1 à 9.

11. Système (80) de robot suivant la revendication 10, **caractérisé en ce que** le système (80) de robot comprend au moins un deuxième robot (11).

12. Système (80) de robot suivant l'une des revendications 10 ou 11, **caractérisé en ce que** le au moins un élément (30) lumineux est constitué sous la forme d'une pluralité d'éclairages (32) segmentés, qui sont mis respectivement sur ou au dessus du segment (26) de plancher associé.

13. Système (80) de robot suivant l'une des revendications 11 ou 12, **caractérisé en ce que** le au moins un élément (30) lumineux est constitué sous la forme d'un projecteur (34) d'images, qui peut être commandé et qui est mis au dessus des segments (26) de plancher associés.

14. Programme (90) informatique mémorisé sur une mémoire ou sur un support de données et propre à effectuer un procédé suivant l'une des revendications 1 à 9 sur un système (80) de robot suivant l'une des revendications 10 à 13.

15. Unité (40) de commande, comprenant une mémoire, **caractérisée en ce qu'**un programme (90) informatique, suivant la revendication 14, est mémorisé sur la mémoire, de manière à pouvoir être exécuté.
